# EUROPEAN PATENT SPECIFICATION

(11) **EP 3 874 327 B1**
(45) Date of publication and mention of the grant of the patent: **18.10.2023**
(21) Application number: 19809135.7
(22) Date of filing: 25.10.2019
(51) Int. Cl.: G02F 1/225, G02B 6/12, G02B 6/28, G02F 1/21

(54) **OPTICAL FINITE IMPULSE RESPONSE FILTER WITH RATE FLEXIBILITY AND MULTI-WAVELENGTH OPERATION CAPABILITY BASED ON INTEGRATED DELAY LINES WITH MICRO-RING RESONATORS**
OPTISCHER FINITE-IMPULSE-RESPONSE-FILTER MIT RATENFLEXIBILITÄT UND MULTIWELLENLÄNGENBETRIEBSFÄHIGKEIT BASIEREND AUF INTEGRIERTEN VERZÖGERUNGSLEITUNGEN MIT MIKRORINGRESONATOREN
FILTRE OPTIQUE À RÉPONSE IMPULSIONNELLE FINIE À FLEXIBILITÉ DE DÉBIT ET CAPACITÉ DE FONCTIONNEMENT À LONGUEURS D'ONDE MULTIPLES FONDÉE SUR DES LIGNES DE RETARD INTÉGRÉES AVEC DES RÉSONATEURS À MICRO-ANNEAU

(30) Priority: 30.10.2018 GR 20180100487
(43) Date of publication of application: 08.09.2021
(73) Proprietor: OPTAGON PHOTONICS PRIVATE COMPANY, 15351 Pallini Attikis (GR)
(72) Inventor: KOULOUMENTAS, Christos, 153 51 Pallini Attikis (GR); TSOKOS, Christos, 121 37 Peristeri Attikis (GR); GKROUMAS, Panagiotis, 121 37 Peristeri Attikis (GR); GOUNARIDIS, Eleftherios, 11363 Athens (GR); MYLONAS, Elias, 124 62 Dasos Haidariou Attikis (GR)
(74) Representative: Samouilidis, Emmanouil
(86) International application number: PCT/GR2019/000071
(87) International publication number: WO 2020/089661

(56) References cited:
- EP-A2- 1 164 724
- EP-B1- 1 164 724
- US-A1- 2005 271 323
- US-A1- 2009 116 786
- US-B1- 8 879 916
- US-B1- 8 976 445

## Description

The present invention relates to the design of a photonic integrated circuit with tapped delay lines that can act as a Finite Impulse Response (FIR) filter with symbol rate flexibility in optical communication systems. In the same form, the specific circuit can also act as an optical correlator with symbol rate flexibility in optical processing systems. The delay lines inside the circuit are based on cascades of Micro-Ring Resonators (MRRs) with tunable quality factors (Q-factors). More specifically, the invention relates to the general design of the circuit, to methods for the selection of the number, the round-trip time, the Q-factor and the position of the MRRs inside the circuit, to methods for extending the circuit operation and accommodating simultaneous processing of Wavelength Division Multiplexing (WDM) channels, to the combination of the circuit with an electronic control unit inside an optical FIR filter module or an optical correlator module, and to the combination of the optical FIR filter module with standard optical transmitter and receiver designs for use in optical communication transmission systems.

FIR filters are implemented today in the electronic domain as either analog or digital circuits, and are employed in optical transmission systems in order to mitigate the bandwidth limitations of the components of these systems and the dispersion effects inside the optical fibers (see for example EP1164724A2 as background art). Although simple and efficient in most cases, the electronic FIR filters suffer from bandwidth limitations themselves, and thus they are unable to support operation at high symbol rates. Moreover, they have limited possibility to adjust their operation to different symbol rates and they can process only one channel per time. In order to overcome the basic limitation of the electronic FIR filters in terms of analog bandwidth and operating symbol rate, optical implementations have been proposed and have been demonstrated in the past. These implementations are divided into two main categories. The first one includes photonic integrated circuits with lattice filter architecture. These circuits are based on a cascade of asymmetric Mach-Zehnder Interferometers (MZIs) that are interconnected using 2x2 optical couplers. The asymmetry of the MZIs corresponds to a time delay, which defines the transfer function of the FIR filter, and thus the operating symbol rate that the filter can operate with. A short range of symbol rates around this reference rate can be also supported, but the flexibility is limited due to the fixed time delay of the asymmetric MZIs. The second category of optical implementations includes bulk optical circuits with a multicasting stage, where a nonlinear medium generates a number of copies of the input signal at different wavelengths, and a time delay stage, where a dispersive medium assigns a set of different time delays to the different copies of the input signal according to their wavelength. Using pump lasers with wavelength tunability, it is possible to control the assigned time delays, facilitating the flexibility of the filter to operate on various symbol rates. However, due to the complexity and the low power efficiency of the nonlinear process in the multicasting stage, and the bulk implementation of the multicasting and the time delay stage, these implementations turn to be complex, bulky, and thus impractical for real-life applications.

Accordingly, the present invention provides a circuit design concept for an optical FIR filter, which combines the benefits of a photonic integrated circuit with the possibility for wide flexibility of the FIR filter regarding the operating symbol rate. The optical circuit has the architecture of a direct-form FIR filter with variable number of taps. The input signal enters the circuit from the input waveguide and is split among the filter taps using a series of 2x2 optical couplers with tunable coupling ratio. Given that this coupling ratio can have any value between 0 and 1, the tunability of the couplers allows for selecting the number of the active taps by excluding some of them from the operation of the circuit. Inside each tap, the time-delay of the optical signal is adjusted by means of MRRs, which are organized into two groups. Each group has the form of an MRR cascade: the cascade of what we call hereafter analog MRRs and the cascade of what we call hereafter digital MRRs. Both types of MRRs are connected to the bus waveguide via a tunable 2x2 coupler in the form of an MZI. The coupling ratio of this MZI adjusts the Q-factor of the corresponding MRR and the time delay that is imposed on the optical signal. In the case of the analog MRRs, the coupling ratio can be tuned in a continuous way between 0 and 1. At the limit of coupling ratio equal to 1, the MRR works as a simple delay line with a time delay equal to its round-trip time. When the coupling ratio drops, the MRR operates as an optical cavity with increasing Q-factor and time delay. At the limit of coupling ratio equal to 0, the MRR is isolated from the bus waveguide, and thus the imposed time delay becomes 0. The increase in the time delay that is imposed by a single analog MRR comes at the expense of a reduction in the spectral width of its time delay function, which can critically deteriorate the integrity and the quality of a high-rate signal. In order to prevent this deterioration, the analog MRRs should be cascaded inside each tap with a phase shift with respect to each other, which corresponds to a wavelength shift between their time delay functions. In this way, the total time delay function of the cascade can keep a small variation within the bandwidth of interest for a wide range of nominal time delays. In order to increase further the time delay tunability of each tap without using an excessive number of analog MRRs, a second cascade with digital MRRs is employed. Each digital MRR has a similar structure as the analog one, but the coupling ratio of its corresponding MZI can be only 0 or 1. In this way, each digital MRR can either have no contribution at all or contribute to the total delay of each tap with its round-trip time. Since the cascade of the digital MRRs has minimum impact on the power loss of the input signal across the bandwidth of interest, it can be placed inside each tap in series with the next taps and contribute to their time delay. On the contrary, since the cascade of the analog MRRs can have significant impact on the power loss of the input signal across the bandwidth of interest, it is placed inside each tap in parallel with the next taps. Finally, the delayed replicas of the optical signal at the output of each tap are combined together and form the output signal of the FIR filter using a second series of tunable 2x2 couplers. Since this combination takes place in a coherent way, the phase of each delayed replica is adjusted by a phase shifter inside each tap.

Moreover, the present invention provides a method for the determination of the number and the round-trip time of the analog and digital MRRs inside each tap in order to support the operation of the optical FIR filter with a wide range of symbol rates. The method takes first as inputs the minimum and the maximum symbol rate that the optical FIR filter should support and the maximum level of fluctuation of the time delay across the useful part of the optical spectrum that can be tolerated. Using the information about the minimum and the maximum symbol rate, the method calculates the minimum and the maximum time delay (D) that each tap should additionally provide compared to the previous one. Using the information about the minimum and the maximum time delay and the information about the maximum, the method calculates the number of the analog MRRs that are required inside each tap. The round-trip time of each analog MRR is determined in turn by dividing the minimum time delay by the number of the analog MRRs inside each tap. The round-trip time of the digital MRRs inside each tap is determined on the other hand by multiplying the round-trip time of the analog MRRs with a multiplication factor larger than 1. We call this factor hereafter as Ring Magnification Factor (RMF). Finally, the number of the digital MRRs that are required inside each tap is determined using the information about the maximum time-delay inside each tap and the RMF.

Moreover, the present invention provides a concept for the practical assignment of the weights (w_{N}) to the taps of the FIR filter, when this filter operates as an Adaptive Time Domain Equalizer (ATDE) within an optical communication system. The weights are calculated by an external unit during system operation using a feedback signal from the system and an algorithm like for example the Common Modulus Algorithm (CMA), the Lean Mean Square (LMS) algorithm or any other algorithm that is suitable for the specific type of communication system and the specific channel characteristics. The concept is based on the translation of the weights that should be applied to each tap to relative power levels between the taps. The relative power levels are adjusted through the coupling ratios of the optical couplers that are responsible for splitting the input signal among the taps and the optical couplers that are responsible for recombining the delayed replicas at the output of each tap. In fact, either group of optical couplers or a combination of both groups can be used for the adjustment of the relative power levels without need for use of additional elements such as variable optical attenuators (VOAs) inside the optical circuit.

Accordingly, the present invention provides a concept for the development of an optical FIR filter module, which comprises the circuit of the optical FIR filter and an external electronic control unit. The electronic control unit interfaces with the control hierarchy of the communication system and receives as input the wavelength and the symbol rate of the input signal, the number of the active filter taps and the weights that should be applied to the active filter taps at each point of time. In a different embodiment of the present invention, the electronic control unit receives information about the channel characteristics and the quality of the signal at the receiver of the transmission system and uses its own computational resources in order to calculate the complex weights that should be applied to the active filter taps at each point of time. In either type of embodiment, the electronic control unit uses the input information, generates the proper driving signals (currents or voltages) and drives the phase shifting elements inside the optical couplers, the analog MRRs, the digital MRRs and the phase shifters of the optical circuit in order to achieve the desired configuration of the optical FIR filter. Depending on the photonic integration platform of the optical FIR filter and the technology for the implementation of the phase shifting elements, the latter can have the form of thermal phase shifters, electro-optic phase shifters, acousto-optic phase shifters, stress-optic phase shifters or any other form of phase shifters.

Moreover, the present invention provides a concept for the combination of this optical FIR filter module with a typical optical transmitter or a typical optical receiver in a transmission system. In the first case, the optical FIR filter module is placed at the output of the optical transmitter and receives as optical input the output signal of the optical transmitter. In the second case, it is placed before the receiver and provides its output to the input of the receiver. In either case, the optical FIR filter module interfaces with the control hierarchy of the transmission system and receives the required information in order to configure the optical FIR filter and let it operate as an ATDE. The optical transmission system can be based either on direct or coherent detection techniques and can involve any type of modulation format.

Furthermore, the present invention provides a concept for simultaneous processing of multiple WDM channels by the optical FIR filter module. The potential for multi-channel operation is based on the periodicity of the time delay function of each tap with respect to the operating wavelength. This periodicity originates by the periodicity of the time delay of each analog MRR with respect to the wavelength (or equivalently to the optical frequency). Hence, a WDM signal with channel spacing equal to this periodicity or to an integer multiple of it can enter the optical FIR filter from the input port and get processed in the same way as a single-channel input.

Accordingly, the present invention provides a concept for the combination of the optical FIR filter module with a WDM transmitter or receiver. In the first case, the filter follows the wavelength multiplexing element of the WDM transmitter, and receives as input a WDM signal.

In the second case, the filter module is placed in front of the wavelength demultiplexing element of the WDM receiver, and receives again as input a WDM signal. In either case, the optical FIR filter module interfaces with the control hierarchy of the system and receives the necessary information in order to adapt its configuration, This configuration is the same for all WDM channels at each point of time.

Finally, in addition to the implementation of an ATDE for optical communication applications, the present invention provides the same circuit design concept as a design concept for an optical correlator that can be used in a large variety of optical signal processing applications.

Compared to the optical solutions that have been proposed so far for either type of applications (i.e. for an optical FIR filter in optical communication systems or for an optical correlator in optical processing systems), the circuit design concept of the present invention achieves to combine the simplicity and the low-cost aspect of the photonic integrated circuits with the flexibility of the circuit to operate over a very broad range of input symbol rates. This combination is the main advantage of the present invention, and has the potential to lead to its practical use in real-life systems.

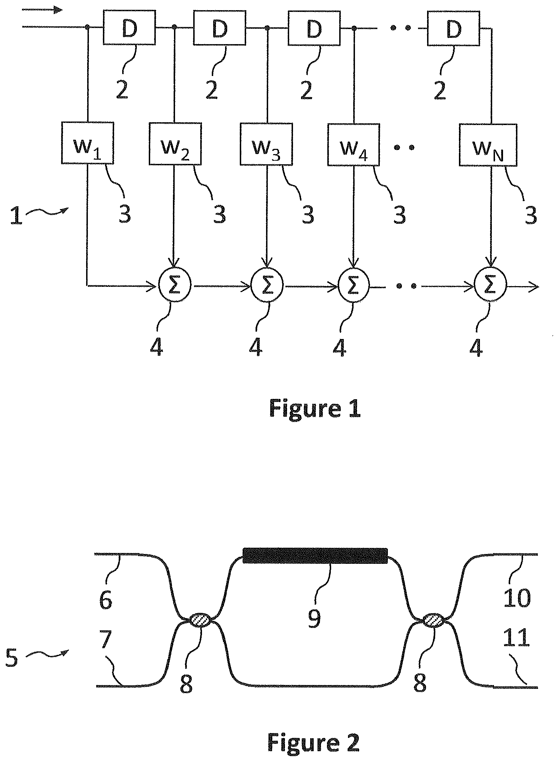

Figure 1 is a general representation of a direct form FIR filter **1** with N taps, which is usually implemented in the electrical domain. Each tap adds a time delay D compared to the previous tap. The parts of the input signal that flow through the individual taps are recombined at the output of the filter using the dedicated elements **4.** The recombination takes place using proper weights for each tap. These weights are assigned to the parts of the signal that flow through the corresponding taps using the dedicated elements **3.**
Figure 2 is a schematic representation of an MZI **5** acting as a 2×2 optical coupler. The MZI has two input waveguides **6** and **7** and two output waveguides **10** and **11.** It can operate either with one optical input entering from one of its input waveguides or with two optical inputs entering from both its input waveguides. The input signals are split by a first 3 dB coupler **8** and propagate along the two arms of the interferometer. The signals at the other end of the two arms are combined using a second 3 dB coupler **8** and leave the MZI from the two output waveguides. The coupling factor of the MZI is determined by the phase shift that is induced in the upper arm of the MZI using a phase shifting element **9.**

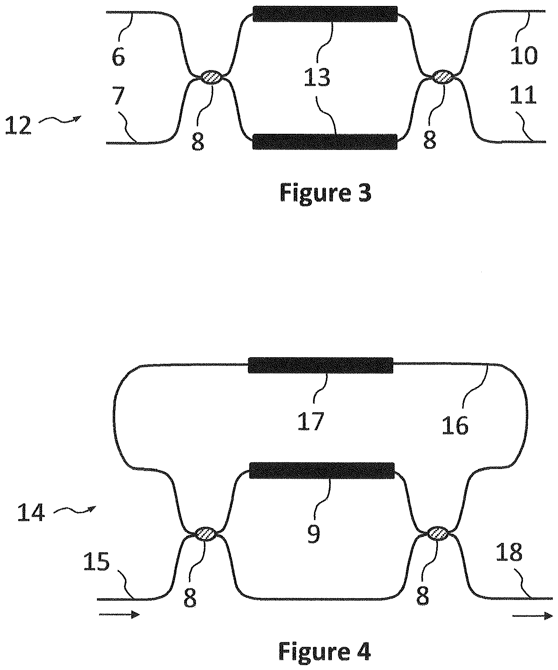

Figure 3 is a schematic representation of a similar MZI structure **12** with phase shifting elements **13** inside both arms of the interferometer.
Figure 4 is a schematic representation of the MRR **14** that acts as the time delay element of the optical FIR filter. The time delay tunability of the MRR is based on the use of an MZI for the interconnection of the looped waveguide **16** of the MRR with the input waveguide **15** and the output waveguide **18,** which are considered as parts of the bus waveguide of the MRR. The coupling factor of the MZI determines the Q-factor of the MRR, and thus the time delay that is imposed by the MRR on the input optical signal. When the coupling factor is 0, an optical signal coming from the input waveguide **15** bypasses the MRR and leaves the structure from the output waveguide **18.** When on the other hand the coupling factor is equal to 1, the optical signal coming from the input waveguide enters the looped waveguide and leaves this waveguide after a single round-trip. In all cases between these two extremes, the MRR behaves as an optical cavity with increasing Q-factor when the coupling factor drops. The coupling factor of the MZI is controlled by the phase shift **9** inside the upper arm of the MZI, which can be also considered as part of the looped waveguide of the MRR. The phase of the MRR itself is controlled by the phase shifting element **17** inside the looped waveguide of the MRR.

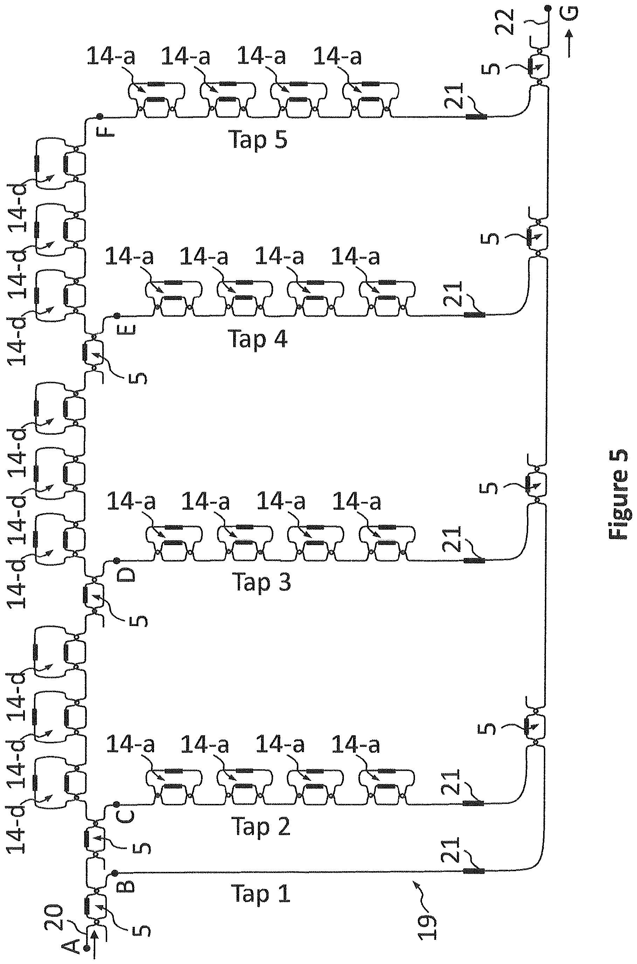

Figure 5 is a schematic representation of the optical circuit **19** that is introduced by the present invention for the implementation of an optical FIR filter and an optical correlator. The circuit follows the general architecture of a direct form FIR filter with N taps. In the specific example the circuit has 5 taps. The input signal comes from the input waveguide **20** and is split among the filter taps with the help of the tunable MZIs **5** in the upper part of the circuit. The MRRs inside the circuit serve as tunable time delay elements and are grouped into two categories. The analog MRRs **14-a** are placed inside each tap in parallel with the other taps and can have any coupling factor between 0 and 1. The digital MRRs **14-d** on the other hand are placed in series with the other taps and can have a coupling factor either 0 or 1. In the same schematic representation, the phase shifters **21** are responsible for the phase tuning of the signals inside each tap, and the tunable MZIs **5** in the lower part of the circuit are responsible for the assignment of the tap weights and for the recombination of the signals at the output of the taps.

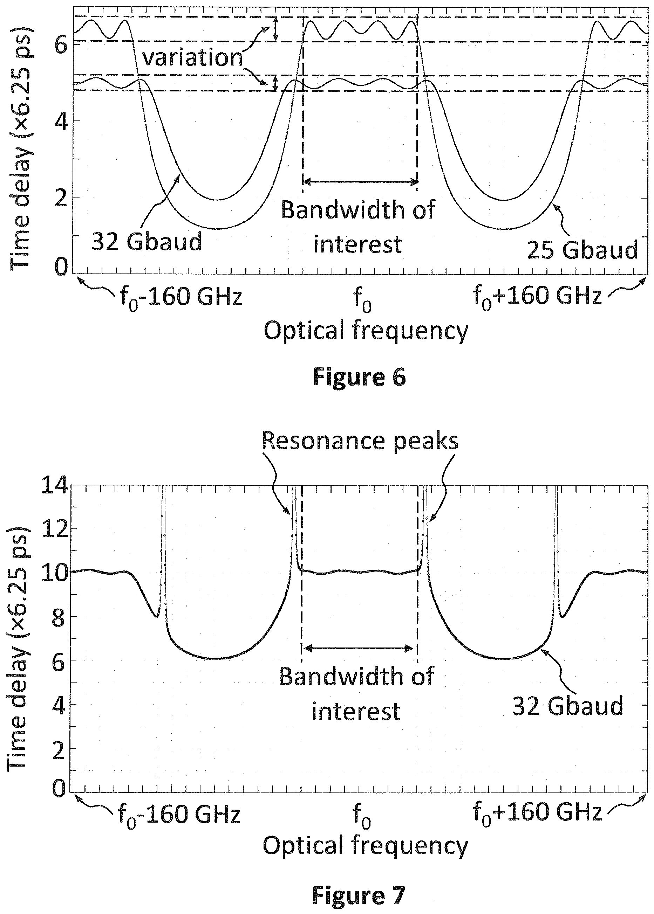

Figure 6 plots the time delay inside the second tap (Tap 2) of the circuit **19** as a function of the optical frequency. In this specific example, the cascade of the analog MRRs **14-a** inside Tap 2 comprises four elements with 6.25 ps round-trip time. The time delay is plotted for two operation cases, where the rate of the input signal is 25 and 32 Gbaud. The vertical dashed lines indicate the bandwidth of interest for the processing of the input signal and the horizontal dashed lines indicate the variation of the time delay that is achieved within this bandwidth.
Figure 7 plots the time delay of the third tap (Tap 3) of the circuit **19** as a function of the optical frequency, and explains the possible appearance of resonant peaks in the time delay function. In this specific example, the cascade of the analog MRRs **14-a** inside Tap 3 comprises four elements with 6.25 ps round-trip time. The cascade of the digital MRRs **14-d** inside the same tap comprises three elements with round-trip time 2.2 times longer than the round-trip time of the analog MRRs. The plot corresponds to an operation case, where the rate of the input signal is 32 Gbaud and the total time delay in Tap 3 is 62.5 ps. The resonance peaks that appear at the edges of the bandwidth of interest originate from a digital MRR, which remains inactive but its coupling factor is not precisely 0.

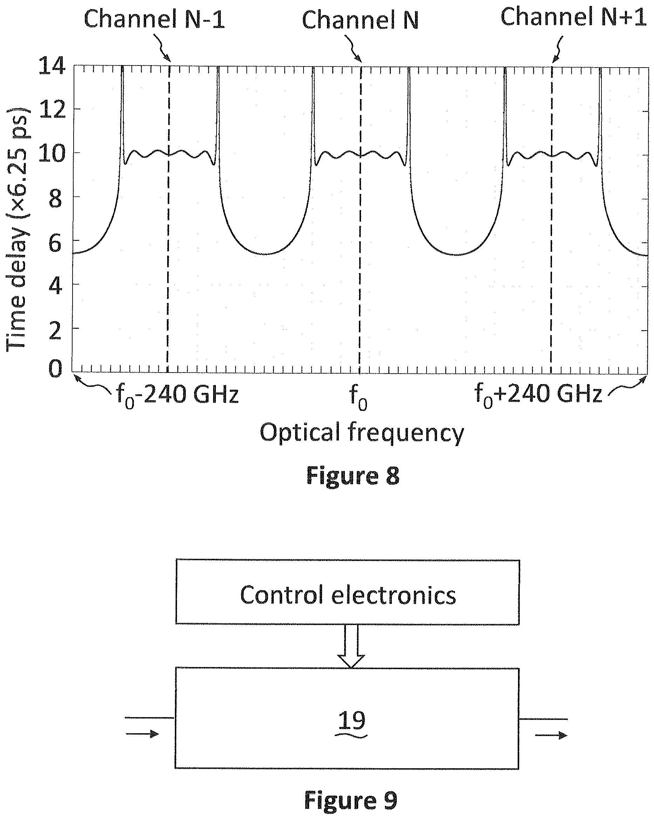

Figure 8 plots the time delay of the third tap (Tap 3) of the circuit **19** as a function of the optical frequency, and explains the possibility of the circuit for multi-channel operation. The cascade of the analog MRRs **14-a** inside Tap 3 comprises again four elements with 6.25 ps round-trip time. However, the three elements in the cascade of the digital MRRs **14-d** inside the same tap have a round-trip time, which is 2 times longer than the round-trip time of the analog MRRs. The periodicity of the time delay function allows for the simultaneous processing of multiple WDM channels, provided that the channel spacing is equal to this periodicity.
Figure 9 presents the high-level architecture of an optical FIR module, comprising the circuit of the optical FIR filter **19** and an electronic control unit. The electronic control unit receives a set of input information from the network hierarchy and controls the configuration of the optical circuit. This control is materialized through the generation of the proper driving signals (currents or voltages) for the phase shifting elements inside the optical couplers, the analog MRRs, the digital MRRs and the phase shifters of the optical couplers. This high-level architecture remains the same in the case of an optical correlator module, comprising the same optical circuit and an electronic control unit.

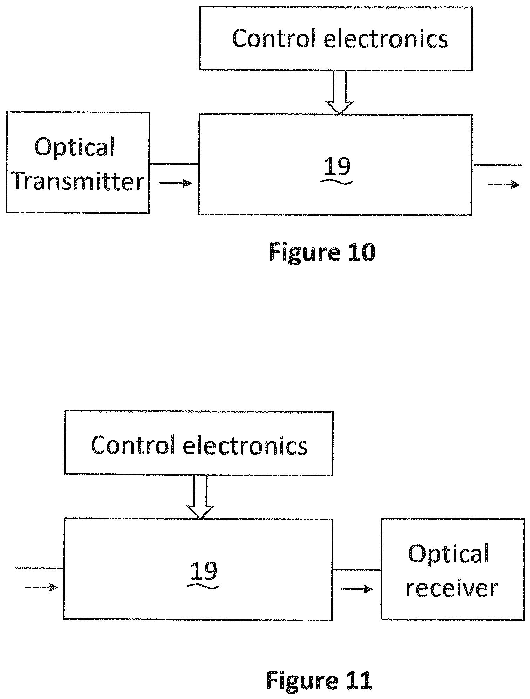

Figure 10 is a schematic representation for the combination of the optical FIR filter module with a single-channel transmitter and its use as an ATDE inside an optical transmission system.
Figure 11 is a schematic representation for the combination of the optical FIR filter module with a single-channel receiver and its use as an ATDE inside an optical transmission system.

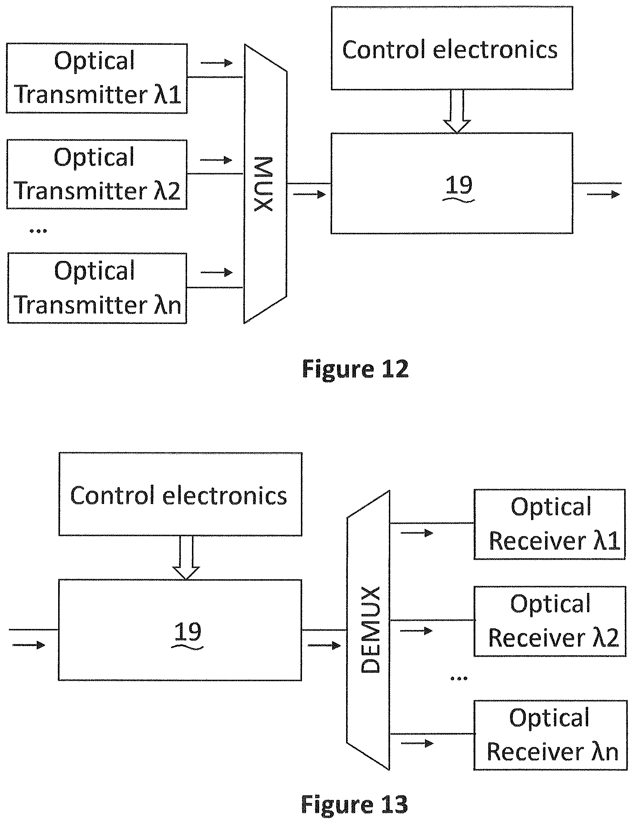

Figure 12 is a schematic representation for the combination of the optical FIR filter module with a WDM transmitter and its use as an ATDE inside an optical transmission system. The optical circuit of the FIR filter **19** receives as input the wavelength multiplexed signal from the output of the WDM multiplexer of the transmitter, and accommodates the simultaneous processing of all WDM channels.
Figure 13 is a schematic representation for the combination of the optical FIR filter module with a WDM receiver and its use as an ATDE inside an optical transmission system. The optical circuit of the FIR filter **19** receives as input the WDM signal that propagates along the optical transmission line and accommodates the simultaneous processing of all its channels. The output of the optical FIR filter is forwarded to the WDM receiver for WDM demultiplexing and subsequent detection of each channel.

In a specific embodiment of the present invention, the proposed circuit has the form of the circuit **19** in Figure 5 and operates as a single-channel optical FIR filter with up to five active taps. The circuit implements the functionality of the direct-form FIR filter shown in Figure 1 with a relative time delay of each tap compared to the previous one equal to D. The circuit has a single input waveguide **20** and a single output waveguide **22.** The activation or deactivation of the filter taps and the adjustment of the input optical power for each one of the taps are realized with the help of the four MZIs **5** in the upper part of the circuit, which have a single active arm and act as tunable 2×2 couplers. Inside each tap, there is a number of analog MRRs **14-a** and a number of digital MRRs **14-d,** which adjust the time delay of each tap. Exception to this rule is the first tap, which does not have any time delay elements, and the second tap, which has only analog MRRs. The analog MRRs inside each tap are placed in parallel with the next taps, whereas the digital MRRs are placed in series with them. A phase shifter **21** is also located inside each tap in order to adjust the optical phase of the optical signal before its recombination with the signals from the other taps. Finally, a second set of four MZIs **5** in the lower part of the circuit act as tunable 2×2 couplers and recombine the optical signals from each tap in order to form the output signal of the circuit.

Without taking into account the presence of the MRRs in the circuit **19,** the five optical paths from the input to the output port of the circuit that correspond to the five taps have exactly the same length. These paths include the path from point A to point G via point B (Tap 1), the path from point A to point G via point C (Tap 2), the path from point A to point G via point D (Tap 3), the path from point A to point G via point E (Tap 4), and the path from point A to point G via point F (Tap 5). When in operation, the analog and the digital MRRs of the circuit are properly tuned in order to lift this path equality and provide additional time delays within Tap 2, Tap 3, Tap 4 and Tap 5. The specific embodiment of the present invention relates (but is not limited) to the common case, where the difference between the time delays of successive taps (D) is the same as the symbol period of the input signal. We take as example a specific case, where the optical FIR filter should support the processing of input signals with symbol rates between 25 and 40 Gbaud. The symbol period that corresponds to the lowest symbol rate is 40 ps and the symbol period that corresponds to the highest symbol rate is 25 ps. Hence, the analog MRRs **14-a** inside Tap 2 should be able to cover the complete range from 25 to 40 ps, keeping the time delay fluctuation across the bandwidth of interest below a specified level. We take as example for the description of the specific embodiment a case, where the time delay fluctuation should be kept within ±5% of the nominal value inside an optical frequency range twice as broad as the symbol rate of the input optical signal (i.e. within a 50 GHz range for a 25 Gbaud signal, 64 GHz range for a 32 Gbaud signal and 80 GHz range for a 40 Gbaud signal). This specification can be met with the use of four analog MRRs. Since the minimum time delay that has to be provided by the cascade of the four MRRs inside Tap 2 is 25 ps, the maximum round-trip time of each MRR is 6.25 ps and corresponds to a Free Spectral Range (FSR) of 160 GHz. When the cascade of the MRRs is tuned for operation with an input signal of 40 Gbaud (i.e. with 25 ps symbol period), the coupling factors for the amplitude coupling of the signal into the MRRs are equal to 1, enabling a single round-trip of the signal inside each MRR. When on the other hand the cascade of the MRRs is tuned for operation with an input signal at lower symbol rate, the coupling factor of each MRR gets lower than 1, providing a time delay, which is longer than its round trip time. Figure 6 depicts as an example the total time delay in Tap 2 as a function of the optical frequency, when the four MRRs are tuned for operation with an input signal of 32 Gbaud (i.e. with symbol period of 31.25 ps) or 25 Gbaud (i.e. with symbol period of 40 ps). In the first case, the coupling factors of the four MRRs are 0.73, 0.79, 0.79 and 0.73 and the relative phase shift of each MRR compared to the previous one is π/3. Given that the reference phase shift of 0 rad corresponds to the case of the spectral alignment between the input signal and a resonance of each MRR, the phase shifts of the four MRRs are -π/2, -π/6, π/6 and π/2. In the second case, the coupling of the MRRs are 0.595, 0.665, 0.665 and 0.595and the relative phase shift of each MRR compared to the previous one is pi/4. In both cases, the coupling factor of each MRR is tuned with the help of the phase shifter **9** inside the MZI that interconnects the MRR with the bus waveguide. On the other hand, the phase shift of each MRR is tuned with the help of the phase shifter **17,** which is inside the MRR.

In the same example, the number and the round-trip time of the analog MRRs **14-a** inside Tap 3, Tap 4 and Tap 5 of the filter remain the same as in Tap 2. Moreover, the round-trip time of all the digital MRRs **14-d** of the circuit is determined through the multiplication of the round-trip time of the analog MRRs with the Ring Magnification Factor (RMF). Using an RMF of 2.2 as example in the specific embodiment of the invention, the round-trip time of the digital MRRs is set to 13.75 ps. Given that Tap 3 should be able to provide a time delay, which is twice as long as the time delay of Tap 2, the cascade of the analog and digital MRRs along the path of Tap 3 should be able to provide a total time delay between 50 and 80 ps. Moreover, given that the cascade of the four analog MRRs can provide a time delay between 25 and 40 ps on its own, there is a need for use of three digital MRRs. The range of time delay between 50 and 53.75 ps can be covered in a continuous way with the use of the four analog MRRs and the activation of one digital MRR. The range of the time delay between 53.75 and 67.5 ps can be covered with the activation of one more digital MRR, whereas the range between 67.5 and 80 ps can be covered with the activation of all three digital MRRs.

Accordingly, given that Tap 4 should be able to provide a time delay, which is three times as long as the time delay of Tap 2, the cascade of the analog and digital MRRs along the path of Tap 4 should be able to provide a time delay between 75 and 120 ps. Inside the path of Tap 4 however, we find the three digital MRRs that are part of Tap 3, too. Thus, the four analog MRRs of Tap 4 and the digital MRRs of Tap 4 should be able to add the required time delay to the time-delay of the digital MRRs of Tap 3 in order to cover in a continuous way the complete range between 75 and 120 ps. This is possible in all cases through the activation of one, two or three additional digital MRRs. In a similar way, given that the Tap 5 should be able to provide a time delay, which is four times as long as the time delay of Tap 2, the cascade of the analog and digital MRRs along the path of Tap 5 should be able to provide a time delay between 100 and 160 ps. Inside the path of Tap 5 however, there are the three digital MRRs of Tap 3 and the three digital MRRs of Tap 4. Thus, the four analog MRRs of Tap 5 and the digital MRRs of Tap 5 should be able to add the required time delay to the time delay of the digital MRRs of Tap 3 and Tap 4 in order to cover in a continuous way the range between 120 and 160 ps. This is also possible in all cases through the activation of one, two or three digital MRRs inside Tap 5. The placement of the digital MRRs of each tap in series with the other taps enables their common use by multiple taps and has as a result the reduction of the total number of digital MRRs inside the circuit. Moreover, the use of digital MRRs, which have a coupling factor of either 0 when inactive or 1 when active, has as a result the minimization of the wavelength dependent loss of the optical FIR filter, and thus the minimization of the signal distortion. More precisely, the coupling factor of each digital MRR can never be exactly 0 or 1 due to the finite extinction ratio of the corresponding MZI that acts as 2×2 coupler and interconnect the MRR with the bus waveguide. For coupling factors close to 0 in particular, this deviation can cause significant distortion, since the digital MRR behaves as a high Q-factor cavity with sharp resonances. Within the bandwidth of these resonances, the optical transmission is very low and the time delay extremely long. In order to avoid any signal distortion, the phase of each digital MRR should be properly tuned, so as to keep its resonances outside the useful spectrum of the signal. Given that the spectral distance between successive resonances is inversely proportional to the round-trip time of the MRR, this requirement leads to a practical limitation in the RMF of the circuit design. Figure 7 presents as example the time delay of Tap 3 as a function of the optical frequency, when the rate of the input signal is 32 Gbaud and the digital MRRs of the circuit have realistic coupling factors. The time delay along the path of Tap 3 should be 62.5 ps. This time delay can be achieved with the activation of two digital MRRs and the tuning of the four analog MRRs inside Tap 3. The third digital MRR should be kept inactive by setting its coupling factor equal to 0. However, due to the finite extinction ratio of its MZI coupler, we use in this specific example a coupling factor of 0.01, which has as a result the generation of two resonant peaks at the two edges of the useful spectrum of the signal. If the RMF gets much higher than 2.2, which is the value of the RMF in this specific example, the two resonance peaks will get closer together and will enter the area of the useful spectrum of the signal, leading to signal distortion.

In the same embodiment of the present invention, the adjustment of the weights w₁, w₂, w₃, w₄ and w₅ of the five taps can be based on a usual algorithm like for example the LMS algorithm. In the optical circuit **19** of Figure 5, we let the four MZIs **5** that act as tunable 2×2 couplers in the upper part of the circuit to split the input signal into five equal parts, feeding the corresponding taps. In order to achieve this power equality, the power coupling ratios of the four MZIs should be set to 20:80, 25:75, 33.3:66.7 and 50:50, respectively. In the lower part of the circuit, the second quad of MZIs **5** is properly tuned in order to assign the calculated weights to the taps, taking into account the square law of the optical detection. Finally, the phase shifters **21** inside each tap are also tuned in a proper way in order to ensure the same optical phase for the optical signals of all taps. No other components are used inside the circuit for the assignment of the tap weights apart from the MZI couplers that are already part of the circuit for the recombination of the optical signals at the output of each tap.

Finally, in the same embodiment of the present invention, the optical circuit of the FIR filter is placed in front of a direct-detection receiver, which receives as input the output signal of the filter. The tuning of the MZIs **5,** the analog MRRs **14-a,** the digital MRRs **14-d** and the phase shifters **21** of the circuit is realized with the help of phase shifting elements, which are controlled by an electronic control unit.

In a different embodiment of the present invention, it might be beneficial to have a time delay difference between successive taps, which is shorter (e.g. by 20%) than the symbol period of the input signal. In this embodiment, the design of the cascade of the analog MRRs should take into account a broader time delay range. If the symbol period that corresponds to the highest symbol rate is T_{H} and the symbol period that corresponds to the lowest symbol rate is T_{L}, the required time delay range is from 0.8·T_{H} to T_{L}. In this sense, the round-trip time of the analog MRR should be also shorter. The design of the digital MRRs from that point on follows the same rules as in the previous embodiment.

In another embodiment of the present invention, the optical FIR filter might need to operate as a fractional delay filter. For example, it might need to operate with a time delay difference between the successive taps that is equal to half the symbol period of the input signal. This requirement results again in a modification of the required range of time delay that the cascade of the analog MRRs should support. The design of the analog and the digital MRRs from that point on follows again the same rules as in the previous two embodiments.

In another embodiment of the present invention, the optical FIR filter provides the possibility for simultaneous processing of multiple WDM signals. With reference to the optical circuit **19** of Figure 5, we select again a circuit design with four analog MRRs **14-a** and three digital MRRs **14-d** inside each tap. We also select the round-trip time of each analog MRR to be 6.25 ps and the RMF to be equal to 2. Figure 8 presents the time delay along the path of Tap 3 as a function of the optical frequency, when we have two digital MRRs active and we properly tune the analog MRRs inside Tap 3 in order to get a total time delay of 62.5 ps. As shown in Figure 8, the time delay function is periodic with the same periodicity as the analog MRRs (i.e. 160 GHz). If the input of the circuit is a WDM signal with channel spacing equal to this periodicity, the WDM channels can be simultaneously processed by the optical FIR filter.

Finally, in another embodiment of the present invention, the optical circuit of Figure 5 operates as an optical correlator, enabling the sequential shift of the input symbol stream through the five taps of the optical circuit. The relative time delay between the successive taps is equal to the symbol rate of the input signal. Using the same approach described above for the case of the first embodiment of the present invention, the cascade of the analog MRRs and the cascade of the digital MRRs inside each tap can be designed in a way that can support the operation of the correlator with a broad range of input symbol rates. In a similar embodiment of the present invention, the optical circuit can also act as a multi-wavelength optical correlator, supporting data correlation in a 2-dimensional data space.

## Claims

1. A device in the form of a photonic integrated circuit for optical implementation of a Finite Impulse Response (FIR) filter with adjustable number of filter taps and flexibility in the selection of the time delay of each tap, comprising:
An input waveguide for the entry of the optical signal.
A set of tunable optical couplers for selecting the number of the taps and for splitting the input optical signal among the taps.
A set of micro-ring resonators (MRRs) with a Mach Zehnder Interferometer (MZI) as a tunable coupler to their bus waveguide, for adjusting the time delay of the taps, comprising a subset of analog MRRs with free selection of their coupling factor to the bus waveguide and a subset of digital MRRs with coupling factor either zero or one.
A set of optical phase shifters for adjusting the optical phase of the signals at the output of each tap.
An additional set of tunable optical couplers at the final stage of the circuit for recombining the signals from each tap and forming the output signal.
An output waveguide for the exit of the optical signal from the device.

2. A method for selecting the place, the number and the round-trip time of the analog and digital MRRs of a device as claimed in claim 1, comprising the steps of:
Determining the minimum and maximum symbol rate of the input optical signal that a device as claimed in claim 1 has to support.
Translating this minimum and maximum symbol rate into minimum and maximum time delay difference between successive taps of the filter, taking into account the intended relation between the time delay difference and the symbol period of the optical signal.
Determining the maximum level of time delay fluctuation within the bandwidth of interest that can be tolerated by the optical system.
Identifying the required number of the analog MRRs that should be cascaded inside each tap in order to keep the time delay fluctuation below this maximum level.
Selecting the round-trip time of each analog MRR to be equal to the minimum time delay difference between successive taps of the FIR filter divided by the number of the analog MRRs that are cascaded inside each tap (apart from the first one).
Placing the cascade of the analog MRRs inside each tap in parallel to the other taps.
Selecting the round-trip time of the digital MRRs to be equal to the product of the round-trip time of the analog MRRs times a factor larger than 1.
Identifying the required number of digital MRRs that should be cascaded and placed inside each tap in series with the next taps in order to cover the full range of time-delay for all input symbol rates and for all taps.

3. A method for assigning the weights to the taps of an optical FIR filter device as claimed in claim 1, comprising the steps of:
Translating the weights that are to be applied to the different taps into a relation between the optical powers of the signals that come from each tap at the final output of the device.
Determining the coupling factors of the optical couplers at the input and at the output of each tap that ensure the required relation between the optical powers, as described in the previous step, and minimizes the total optical power loss of the optical FIR filter.
Adjusting the coupling factors of the optical couplers in accordance with the previous step.

4. An optical FIR filter module for mitigation of inter-symbol-interference (ISI) effects in a transmission link, comprising:
A device as claimed in claim 1, operating as the optical part of the module.
An electronic control unit that receives as input information the symbol rate of the input optical signal, the central wavelength of the input optical signal and the set of the weights that are to be applied at each point of time to the taps of the optical part of the module, and generates the electrical current or voltage signals that are required for the configuration of the optical couplers, the analog MRRs, the digital MRRs and the optical phase shifters of the optical part of the module.

5. An optical transmitter subsystem for transmission links with either direct or coherent detection, comprising a main transmitter unit and an optical FIR filter module as claimed in claim 4, wherein the optical FIR filter module follows the main transmitter unit and serves as the front-end of the optical transmitter subsystem.

6. An optical receiver subsystem for transmission links with either direct or coherent detection, comprising an optical FIR filter module as claimed in claim 4 and a main receiver unit, wherein the optical FIR filter module precedes the main receiver unit and serves as the front-end of the optical receiver subsystem.

7. A device as claimed in claim 1 for simultaneous processing of multiple WDM channels, wherein the input optical signal is a WDM signal with channel spacing equal to the Free-Spectral Range (FSR) of the analog MRRs of the device or to a multiple of it.

8. An optical FIR filter module for mitigation of inter-symbol-interference (ISI) effects in a transmission link with multiple WDM channels, comprising:
A device as claimed in claim 7, operating as the optical part of the module.
An electronic control unit that receives as input information the symbol rate of the input optical signals, the central wavelengths of the input optical signals and the set of the weights that are to be applied at each point of time to the taps of the optical part of the module, and generates the electrical current or voltage signals that are required for the configuration of the optical couplers, the analog MRRs, the digital MRRs and the optical phase shifters of the optical part of the module.

9. A WDM transmitter subsystem for either direct or coherent detection transmission links, comprising an array of main transmitter units, a WDM multiplexer and an optical FIR filter module as claimed in claim 8, wherein the optical FIR filter module follows the WDM multiplexer and serves as the front-end of the WDM transmitter subsystem.

10. A WDM receiver subsystem for either direct or coherent detection transmission links, comprising an optical FIR filter module as claimed in claim 8, a WDM demultiplexer and an array of main receiver units, wherein the optical FIR filter module precedes the demultiplexer and serves as the front-end of the WDM receiver subsystem.

11. An optical correlator module for optical signal processing applications comprising a device as claimed in claim 1 and an electronic control unit.

## Patentansprüche

1. Vorrichtung in der Form einer photonischen integrierten Schaltung zur optischen Implementierung eines Filters mit endlicher Impulsantwort (FIR) mit anpassbarer Anzahl von Filterabgriffen und Flexibilität bei der Auswahl der Zeitverzögerung von jedem Abgriff, umfassend:
Einen Eingabewellenleiter für den Eingang des optischen Signals.
Einen Satz abstimmbarer optischer Koppler zur Auswahl der Anzahl der Abgriffe und zum Aufspalten des optischen Eingabesignals unter den Abgriffen.
Einen Satz von Mikroringresonatoren (MRRs) mit einem Mach-Zehnder-Interferometer (MZI) als abstimmbarer Koppler mit deren Wellenleiter zum Anpassen der Zeitverzögerung der Abgriffe, umfassend eine Teilmenge von analogen MRRs mit freier Auswahl ihres Kopplungsfaktors mit dem Bus-Wellenleiter und einer Teilmenge von digitalen MRRs mit Kopplungsfaktor entweder null oder eins.
Einen Satz von optischen Phasenschiebern zum Anpassen der optischen Phase der Signale an der Ausgabe von jedem Abgriff.
Einen zusätzlichen Satz von abstimmbaren optischen Kopplern auf einer Endstufe der Schaltung zur Rekombination der Signale von jedem Abgriff und Bilden des Ausgabesignals.
Einen Ausgabewellenleiter für den Austritt des optischen Signals aus der Vorrichtung.

2. Verfahren um Auswählen des Orts, der Anzahl und der Schleifenlaufzeit der analogen und digitalen MRRs einer Vorrichtung nach Anspruch 1, umfassend folgende Schritte:
Bestimmen der Mindest- und Höchstsymbolrate des optischen Eingabesignals, die eine Vorrichtung nach Anspruch 1 unterstützen muss.
Übersetzen dieser Mindest- und Höchstsymbolrate in Mindest- und Höchstzeitverzögerungsdifferenz zwischen aufeinanderfolgenden Abgriffen des Filters unter Berücksichtigung des beabsichtigten Verhältnisses zwischen der Zeitverzögerungsdifferenz und der Symbolperiode des optischen Signals.
Bestimmen des höchsten Niveaus von Zeitverzögerungsfluktuation innerhalb der Bandbreite von Interesse, das von dem optischen System toleriert werden kann.
Identifizieren der geforderten Anzahl der analogen MRRs, die innerhalb jedes Abgriffs in Kaskade geschaltet werden sollen, um die Zeitverzögerungsfluktuation unter diesem höchsten Niveau zu halten.
Auswählen der Schleifenlaufzeit von jedem analogen MRR, damit sie gleich der Mindestzeitverzögerungsdifferenz zwischen aufeinanderfolgenden Abgriffen des FIR-Filters geteilt durch die Anzahl der analogen MRRs, die in jedem Abgriff (außer dem ersten) in Kaskade geschaltet sind, wird.
Positionieren der Kaskade der analogen MRRs innerhalb von jedem Abgriff parallel zu den anderen Abgriffen.
Auswählen der Schleifenlaufzeit der digitalen MRRs, damit sie gleich dem Produkt der Schleifenlaufzeit der analogen MRRs mal einem Faktor größer als 1 ist.
Identifizieren der geforderten Anzahl der digitalen MRRs, die in Kaskade geschaltet und innerhalb jedes Abgriffs in Serie mit den nächsten Abgriffen positioniert werden sollen, um den vollständigen Zeitverzögerungsbereich für alle Eingabesymbolraten und für alle Abgriffe abzudecken.

3. Verfahren zum Zuweisen der Gewichte zu den Abgriffen einer optischen FIR-Filtervorrichtung nach Anspruch 1, umfassend folgende Schritte:
Übersetzen der Gewichte, die auf die unterschiedlichen Abgriffe angewendet werden sollen, in ein Verhältnis zwischen den optischen Leistungen der Signale, die von jedem Abgriff an der Endausgabe der Vorrichtung kommen.
Bestimmen der Kopplungsfaktoren der optischen Koppler an der Eingabe und an der Ausgabe von jedem Abgriff, die das erforderliche Verhältnis zwischen den optischen Leistungen, wie im vorausgehenden Schritt beschrieben, gewährleisten und den Gesamtverlust optischer Leistung des optischen FIR-Filters minimieren.
Anpassen der Kopplungsfaktoren der optischen Koppler gemäß dem vorausgehenden Schritt.

4. Optisches FIR-Filtermodul für die Abschwächung von Effekten der Intersymbolinterferenz (ISI) bei einer Übertragungsverbindung, umfassend:
Eine Vorrichtung nach Anspruch 1, die als der optische Teil des Moduls betrieben wird.
Eine elektronische Steuereinheit, die als Eingabeinformation die Symbolrate des optischen Eingabesignals, die zentrale Wellenlänge des optischen Eingabesignals und den Satz der Gewichte, die zu jedem Zeitpunkt auf die Abgriffe des optischen Teils des Moduls angewendet werden sollen, empfängt, und die elektrischen Strom- oder Spannungssignale erzeugt, die für die Konfiguration der optischen Koppler, der analogen MRRs, der digitalen MRRs und der optischen Phasenschieber des optischen Teils des Moduls erforderlich sind.

5. Optisches Senderteilsystem für Übertragungsverbindungen mit entweder direkter oder kohärenter Erkennung, umfassend eine Hauptsendereinheit und ein optisches FIR-Filtermodul nach Anspruch 4, wobei das optische FIR-Filtermodul auf die Hauptsendereinheit folgt und als das Front-End des optischen Senderteilsystems dient.

6. Optisches Empfängerteilsystem für Übertragungsverbindungen mit entweder direkter oder kohärenter Erkennung, umfassend ein optisches FIR-Filtermodul nach Anspruch 4 und eine Hauptempfängereinheit, wobei das optische FIR-Filtermodul der Hauptempfängereinheit vorausgeht und als das Front-End des optischen Empfängerteilsystems dient.

7. Vorrichtung nach Anspruch 1 zum gleichzeitigen Verarbeiten von mehreren WDM-Kanälen, wobei das optische Eingabesignal ein WDM-Signal mit einem Kanalabstand gleich dem freien Spektralbereich (FSR) der analogen MRRs der Vorrichtung oder einem Vielfachen davon ist.

8. Optisches FIR-Filtermodul zur Abschwächung von Effekten der Intersymbolinterferenz (ISI) in einer Übertragungsverbindung mit mehreren WDM-Kanälen, umfassend:
Eine Vorrichtung nach Anspruch 7, die als der optische Teil des Moduls betrieben wird.
Eine elektronische Steuereinheit, die als Eingabeinformation die Symbolrate des optischen Eingabesignals, die zentralen Wellenlängen des optischen Eingabesignals und den Satz der Gewichte, die an jedem Zeitpunkt auf die Abgriffe des optischen Teils des Moduls angewendet werden sollen, empfängt, und die elektrischen Strom- oder Spannungssignale erzeugt, die für die Konfiguration der optischen Koppler, der analogen MRRs, der digitalen MRRs und der optischen Phasenschieber des optischen Teils des Moduls erforderlich sind.

9. WDM-Senderteilsystem für Übertragungsverbindungen mit entweder direkter oder kohärenter Erkennung, umfassend ein Array von Hauptsendereinheiten, einen WDM-Multiplexer und ein optisches FIR-Filtermodul nach Anspruch 8, wobei das optische FIR-Filtermodul auf den WDM-Multiplexer folgt und als das Front-End des WDM-Senderteilsystems dient.

10. WDM-Empfängerteilsystem für Übertragungsverbindungen mit entweder direkter oder kohärenter Erkennung, umfassend ein optisches FIR-Filtermodul nach Anspruch 8, einen WDM-Demultiplexer und ein Array von Hauptempfängereinheiten, wobei das optische FIR-Filtermodul dem Demultiplexer vorausgeht und als das Front-End des WDM-Empfängerteilsystems dient.

11. Optisches Korrelatormodul für Verarbeitungsanwendungen von optischen Signalen, umfassend eine Vorrichtung nach Anspruch 1 und eine elektronische Steuereinheit.

## Revendications

1. Dispositif sous forme de circuit intégré photonique pour la mise en oeuvre optique d'un filtre à réponse impulsionnelle finie (RIF) avec un nombre réglable de prises de filtre et une flexibilité dans la sélection du délai de chaque prise, comprenant :
un guide d'onde d'entrée pour l'entrée du signal optique,
un ensemble de coupleurs optiques accordables pour sélectionner le nombre des prises et pour répartir le signal optique d'entrée entre les prises,
un ensemble de micro-résonateurs en anneau (MRR) avec un interféromètre de Mach Zehnder (MZI) comme coupleur accordable à leur guide d'onde de bus, pour ajuster le délai des prises, comprenant un sous-ensemble de MRR analogiques avec une sélection libre de leur facteur de couplage au guide d'onde de bus et un sous-ensemble de MRR numériques avec un facteur de couplage soit de zéro, soit de un,
un ensemble de déphaseurs optiques pour ajuster la phase optique des signaux à la sortie de chaque prise,
un ensemble supplémentaire de coupleurs optiques accordables à l'étape finale du circuit pour recombiner les signaux de chaque prise et former le signal de sortie,
un guide d'ondes de sortie pour la sortie du signal optique du dispositif.

2. Procédé de sélection de l'emplacement, du nombre et du temps d'aller-retour des MRR analogiques et numériques d'un dispositif selon la revendication 1, comprenant les étapes consistant à :
déterminer le taux de symbole minimum et maximum du signal optique d'entrée qu'un dispositif selon la revendication 1 doit prendre en charge,
traduire ce débit de symbole minimum et maximum en différence de délai minimum et maximum entre des prises successives du filtre, en tenant compte de la relation prévue entre la différence de délai et la période de symbole du signal optique,
déterminer le niveau maximum de fluctuation de délai dans la largeur de bande concernée qui peut être toléré par le système optique,
identifier le nombre nécessaire des MRR analogiques qui doivent être montés en cascade à l'intérieur de chaque prise afin de maintenir la fluctuation de délai en dessous de ce niveau maximum,
sélectionner le temps d'aller-retour de chaque MRR analogique pour qu'il soit égal à la différence de délai minimum entre des prises successives du filtre RIF divisée par le nombre des MRR analogiques qui sont montés en cascade à l'intérieur de chaque prise (à l'exception du premier),
placer la cascade des MRR analogiques à l'intérieur de chaque prise en parallèle avec les autres prises,
sélectionner le temps d'aller-retour des MRR numériques pour qu'il soit égal au produit du temps d'aller-retour des MRR analogiques par un facteur supérieur à 1,
identifier le nombre nécessaire de MRR numériques qui doivent être montés en cascade et placés à l'intérieur de chaque prise en série avec les prises suivantes afin de couvrir toute la plage de délais pour tous les débits de symbole d'entrée et pour toutes les prises.

3. Procédé d'attribution des poids aux prises d'un dispositif de filtre optique RIF selon la revendication 1, comprenant les étapes consistant à :
traduire les poids qui doivent être appliqués aux différentes prises en une relation entre les puissances optiques des signaux qui proviennent de chaque prise à la sortie finale du dispositif,
déterminer les facteurs de couplage des coupleurs optiques à l'entrée et à la sortie de chaque prise qui assurent la relation nécessaire entre les puissances optiques, comme décrit à l'étape précédente, et minimisent la perte de puissance optique totale du filtre optique RIF,
ajuster les facteurs de couplage des coupleurs optiques conformément à l'étape précédente.

4. Module de filtre optique RIF pour l'atténuation d'effets d'interférence entre symboles (ISI) dans une liaison de transmission, comprenant :
un dispositif selon la revendication 1, fonctionnant comme la partie optique du module,
une unité de commande électronique qui reçoit comme informations d'entrée le débit de symbole du signal optique d'entrée, la longueur d'onde centrale du signal optique d'entrée et l'ensemble des poids qui doivent être appliqués à chaque moment aux prises de la partie optique du module, et qui génère les signaux de courant électrique ou de tension qui sont nécessaires pour la configuration des coupleurs optiques, des MRR analogiques, des MRR numériques et des déphaseurs optiques de la partie optique du module.

5. Sous-système d'émetteur optique pour des liaisons de transmission avec détection directe ou cohérente, comprenant une unité d'émetteur principal et un module de filtre optique RIF selon la revendication 4, dans lequel le module de filtre optique RIF suit l'unité d'émetteur principal et sert d'extrémité frontale du sous-système d'émetteur optique.

6. Sous-système de récepteur optique pour des liaisons de transmission avec détection directe ou cohérente, comprenant un module de filtre optique RIF selon la revendication 4 et une unité de récepteur principal, dans lequel le module de filtre optique RIF précède l'unité de récepteur principal et sert d'extrémité frontale du sous-système de récepteur optique.

7. Dispositif selon la revendication 1 pour le traitement simultané de multiples canaux WDM, dans lequel le signal optique d'entrée est un signal WDM avec un espacement des canaux égal à la plage spectrale libre (FSR) des MRR analogiques du dispositif ou à un multiple de celle-ci.

8. Module de filtre optique RIF pour l'atténuation d'effets d'interférence entre symboles (ISI) dans une liaison de transmission avec de multiples canaux WDM, comprenant :
un dispositif selon la revendication 7, fonctionnant comme la partie optique du module,
une unité de commande électronique qui reçoit comme informations d'entrée le débit de symbole des signaux optiques d'entrée, les longueurs d'onde centrales des signaux optiques d'entrée et l'ensemble des poids qui doivent être appliqués à chaque moment aux prises de la partie optique du module, et qui génère les signaux de courant électrique ou de tension qui sont nécessaires pour la configuration des coupleurs optiques, des MRR analogiques, des MRR numériques et des déphaseurs optiques de la partie optique du module.

9. Sous-système d'émission WDM pour des liaisons de transmission à détection directe ou cohérente, comprenant un réseau d'unités d'émetteur principal, un multiplexeur WDM et un module de filtre optique RIF selon la revendication 8, dans lequel le module de filtre optique RIF suit le multiplexeur WDM et sert d'extrémité frontale du sous-système d'émetteur WDM.

10. Sous-système de récepteur WDM pour des liaisons de transmission à détection directe ou cohérente, comprenant un module de filtre optique RIF selon la revendication 8, un démultiplexeur WDM et un réseau d'unités de récepteur principal, dans lequel le module de filtre optique RIF précède le démultiplexeur et sert d'extrémité frontale du sous-système de récepteur WDM.

11. Module de corrélateur optique pour des applications de traitement de signal optique comprenant un dispositif selon la revendication 1 et une unité de commande électronique.
